# EUROPÄISCHE PATENTSCHRIFT

(11) **EP 0 645 613 B1**
(45) Veröffentlichungstag und Bekanntmachung des Hinweises auf die Patenterteilung: **25.03.1998**
(21) Anmeldenummer: 93810589.7
(22) Anmeldetag: 20.08.1993
(51) Int. Cl.: G01L 9/00

(54) **Herstellverfahren für Dünnschicht-Absolutdrucksensoren**
Method of manufacturing thin-film absolute-pressure sensors
Méthodes de fabrication de capteurs de pression absolue à couche mince

(43) Veröffentlichungstag der Anmeldung: 29.03.1995
(73) Patentinhaber: ENDRESS U. HAUSER GMBH U. CO., D-79689 Maulburg (DE)
(72) Erfinder: Habibi, Masoud Dr. Ing., D-70191 Stuttgart (DE); Lüder, Ernst, Prof. Dr.-Ing. habil, D-70192 Stuttgart (DE); Kallfass, Traugott, Dr., D-71723 Grossbottwar (DE); Hegner, Frank, Dr., D-79540 Lörrach (DE); Schneider, Georg, Dr., D-79650 Schopfheim (DE)
(74) Vertreter: Morstadt, Volker, Dipl.-Ing.

(56) Entgegenhaltungen:
- EP-A- 0 472 108
- DE-A- 3 108 300
- DE-A- 3 723 561

## Beschreibung

Die Erfindung betrifft Dünnschichttechnik-Verfahren zum Herstellen von kapazitiven Absolutdrucksensoren mit einem Grundkörper und einer Membran, die einen hermetisch verschlossenen Hohlraum begrenzen.

Auf diese Weise hergestellte Absolutdrucksensoren sind bisher nicht bekannt geworden. Es sind vielmehr lediglich solche Drucksensoren in der Literatur beschrieben, die mittels der Verfahren der Halbleitertechnik hergestellt werden.

So ist in der Zeitschrift "J. Phys. E: Sci. Instrum.", Vol. 20 (1987), Seiten 1469 bis 1471 ein Drucksensor beschrieben, bei dem auf einem einkristallinen Silicium-Grundkörper eine polykristalline Silicium-Membran angebracht ist, die somit vom Grundkörper elektrisch nicht isoliert ist. Die Membran wird dabei zunächst auf eine SiO₂-Opferschicht aufgebracht, die unter der Membran anschließend wieder entfernt wird.

An der Grenze zwischen Polysilicium-Membran und Silicium-Grundkörper entsteht somit eine Raumladungszone, so daß die Kapazität dieses Drucksensors spannungs- und temperaturabhängig ist. Die Messung der Kapazität kann ferner nur durch hochfrequente, nicht jedoch durch niederfrequente Abtastung erfolgen.

In der Zeitschrift "VDI Berichte", Nr. 939, 1992, Seiten 185 bis 190 ist ferner ein Hochdrucksensor beschrieben, bei dem auf einem einkristallinen Silicium-Grundkörper eine mittels einer Siliciumnitrid-Schicht von ihm isolierte Polysilicium-Membran angebracht ist.

Ein ähnlicher Drucksensor mit vom Silicium-Grundkörper isolierter Polysilicium-Membran und dessen Herstell-Verfahren ist auch in der DE-A 41 04 179 beschrieben.

Bei diesen vorbeschriebenen Drucksensoren und auch bei den in der Zeitschrift "Sensors and Actuators", Vol. A21-A23 (1990), Seiten 1053 bis 1059 beschriebenen Drucksensoren wird der Hohlraum mittels einer zunächst aufgebrachten und dann nach dem Aufbringen der Polysilicium-Membran durch Ätzen mittels Flußsäure wieder entfernten SiO₂-Opferschicht erzeugt.

Das hat aber weitere Nachteile zur Folge: Nach dem erwähnten Ätzen mittels Flußsäure mit daran anschließendem Spülen in deionisiertem Wasser und darauf folgendem Trocken verkleben die dünnen Polysilicium-Membranen meist mit der Silicium-Grundkörper-Oberfläche. Dies kann nur durch aufwendige Gegenmaßnahmen verhindert werden, die im oben erwähnten Stand der Technik eingehend erläutert sind.

Auch führen elektrostatische Felder, die aufgrund des Ätzens und danach an der Oberfläche von Silicium-Grundkörper und Polysilicium-Membran vorhanden sind, zu unerwünschter Durchbiegung der Membran. Zu deren Beseitigung ist eine elektrische Vorspannung erforderlich.

Wie ferner aus der Zeitschrift "Sensors and Actuators A", Vol. 28 (1991), Seiten 133 bis 146 hervorgeht, unterliegen über einer durch seitliches Ätzen von Teilen des Siliciums als Opferschicht gebildeten Vertiefung auf dem übrigen Silicium aufgebrachte dünne Polysilicium-Schichten nach dem Aufbringen einer mechanischen Druckspannung. Dies führt zu einer Hysterese der Druck-Kapazitäts-Kennlinie und zur Verschlechterung des Temperaturverhaltens des Drucksensors.

Die Druckspannung nach dem Aufbringen kann bei einer Polysilicium-Membran nur durch eine dahingehende modifizierte Herstellung verhindert werden, daß in der Membran eine definierte mechanische Zugspannung erzeugt wird.

Ferner ist in der DE-A 37 23 561 ein weiteres Halbleitertechnik-Herstellverfahren für einen kapazitiven Absolutdrucksensor beschrieben, bei dem die den späteren Hohlraum definierende Polysilicium-Opferschicht, die auf einen Grundkörper aus Silicium oder Glas aufgebracht wird, durch viele Öffnungen in einer SiO₂- oder Si₃N₄-Schicht hindurch, die innerhalb des Membrangebiets liegen, weggeätzt wird.

Danach wird eine Deck-Elektrode auf die löchrige SiO₂- oder Si₃N₄-Schicht aufgebracht, die deren Öffnungen hermetisch verschließt. Durch dieses Aufbringen kann aber Material der Deck-Elektrode in den Hohlraum gelangen, was die elektrischen Eigenschaften der Kapazität des Drucksensors verschlechtert.

Um das zu verhindern, ist eine zweite Isolierschicht mit vielen, zu den Öffnungen der ersten Isolierschicht versetzten Öffnungen vorgesehen, die das Eindringen von Material der Deck-Elektrode in den Hohlraum unterbindet. Diese zweite Isolierschicht verkompliziert jedoch die Herstellung erheblich.

Schließlich ist in "Sensors and Actuators B", Vol. 4 (1991), Seiten 79 bis 84 ein Halbleiter-Mikrophon mit Silicium-Grundkörper und Si₃N₄-Membran beschrieben, die über einem Hohlraum angeordnet ist, der durch Ätzen einer Aluminium-Opferschicht durch Löcher in der Si₃N₄-Membran hindurch gebildet worden ist.

Gegenüber diesem gesamten Stand der Technik besteht die Aufgabe der Erfindung darin, Verfahren zum Herstellen von kapazitiven Absolutdrucksensoren anzugeben, die mit den Mitteln der Oberflächen-Mikromechanik in Dünnschichttechnik ausgeführt werden, wobei
- die Elektroden der Kondensatoren einen hohen Isolationswiderstand gegeneinander haben,
- die jeweilige Membran im fertigen Zustand nur einer geringen Zugspannung unterliegt,
- zur Verhinderung des Anklebens der Membran am Grundkörper kein Sublimationsschritt erforderlich ist,
- die Membran auch noch, wenn sie im Überlastungsfall am Grundkörper anliegt, ein Meßsignal in einem weiten Druckbereich liefert,
- das Meßsignal praktisch temperatur-unabhängig ist sowie
- nur wenige Chemical-Vapour-Deposition- und Photolithographie-Schritte erforderlich sind.

Diese Ziele werden von der Erfindung durch die im unabhängigen Anspruch 1 bzw. im unabhängigen Anspruch 2 definierten Verfahrensmaßnahmen erreicht. Vorteilhafte Ausgestaltungen und Weiterbildungen der Erfindung sind in den abhängigen Ansprüchen definiert.

Die Erfindung hat u.a. den Vorteil, daß im Gegensatz zu den eingangs erläuterten Verfahren des Standes der Technik zum Herstellen von Drucksensoren mittels der Halbleitertechnik bei der Erfindung keine Diffusionsschritte erforderlich sind.

Im Unterschied zu den eingangs erwähnten Halbleiter-Drucksensoren mit Polysilicium- oder Si₃N₄-Membran haben die Absolutdrucksensoren nach der Erfindung jeweils eine SiO₂-Membran, die während des Herstellens in den Bereichen, unter denen der Hohlraum gebildet wird, unbearbeitet bleibt.

Die Erfindung wird nun anhand von Ausführungsbeispielen in Verbindung mit den Figuren der Zeichnung näher erläutert.
- Fig. 1: zeigt in Draufsicht vier kapazitive Absolutdrucksensoren, hergestellt nach der ersten Verfahrens-Variante,
- Fig. 2: zeigt Schnittansichten entlang der Linie A-A von Fig. 1,
- Fig. 3: zeigt in Draufsicht vier kapazitive Absolutdrucksensoren, hergestellt nach der zweiten Verfahrens-Variante, und
- Fig. 4: zeigt Schnittansichten entlang der Linie A-A von Fig. 3.

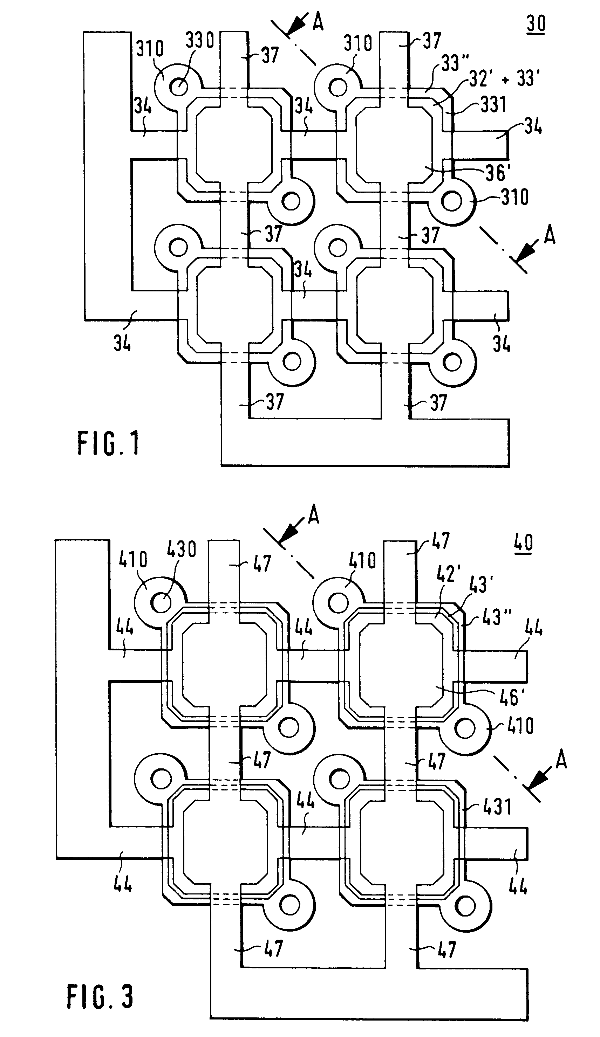

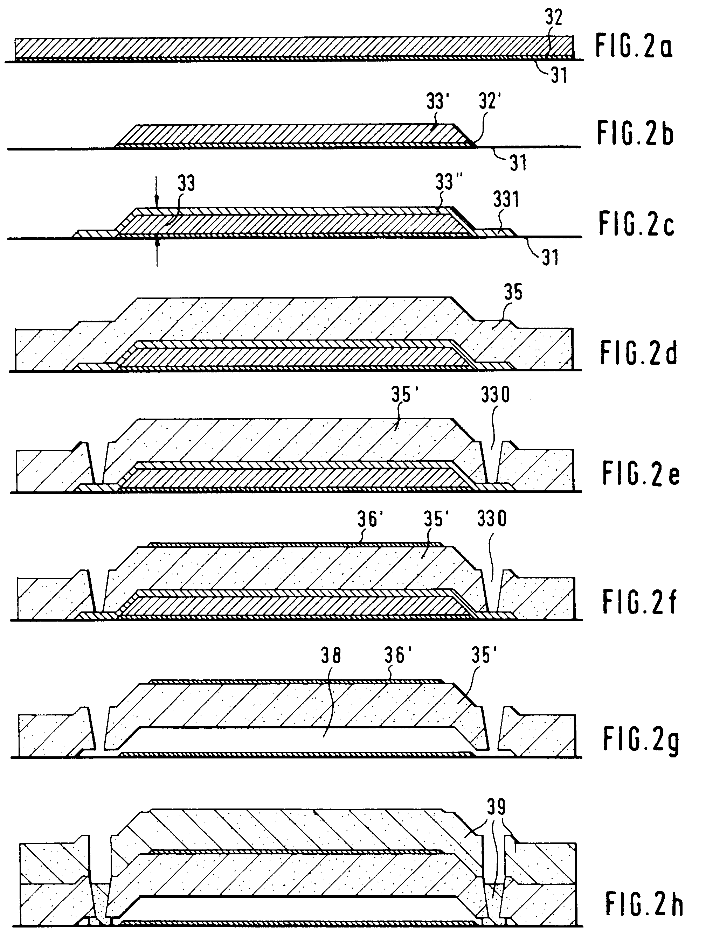

Die Fig. 1 zeigt die Draufsicht auf ein Array von vier neben und übereinander angeordneten, praktisch quadratischen Absolutdrucksensoren 30 entsprechend der ersten Variante der Erfindung, die, wie im folgenden erläutert, hergestellt werden. In den Fig. 2a bis 2h sind dazu Schnittansichten entlang der Linie A-A von Fig. 1 gezeigt, die die Ergebnisse von aufeinanderfolgenden Verfahrensschritten darstellen.

Bei der ersten Variante der Erfindung wird anstatt einer in einem einzigen Verfahrensschritt aufgebrachten Opferschicht eine in zwei Teilschritten aufgebrachte und somit aus einer ersten Teilschicht 33' und einer zweiten Teilschicht 33" bestehende Opferschicht 33 verwendet.

Daher wird eine eine spätere Grundelektrode 32' enthaltende erste Metallschicht 32 auf ein als Grundkörper dienendes Glassubstrat 32 aufgebracht, vgl. Fig. 2a. Vom Glassubstrat 32 ist in den Fig. 2a bis 2h lediglich seine eine Oberfläche als Unterkante der jeweiligen Schnittansicht zu sehen.

Nach diesem Verfahrensschritt wird eine einen ersten Teil der Höhe des (späteren) Hohlraums 34 definierende, eine erste Teilschicht 33' der späteren Opferschicht 33 enthaltende erste strukturierbare Aluminium-Schicht ganzflächig aufgebracht.

Die erste Aluminium-Schicht und die erste Metallschicht 32 werden dann in einem einzigen ersten Photolackschritt zur gemeinsamen Bildung von Grundelektrode 32' sowie damit verbundenen ersten Leitbahnen 34 und auch zur Bildung der mit der Grundelektrode und den Leitbahnen praktisch deckungsgleichen ersten Teilschicht 33' durch Ätzen strukturiert. Dies geschieht im Falle von Chrom als Grundelektroden-Material nacheinander durch Anwendung des jeweils entsprechenden Ätzmittels, jedoch durch dieselbe Photolackmaske hindurch.

Anschließend wird eine den restlichen Teil der Höhe des Hohlraums 34 definierende, eine zweite Teilschicht 33" der späteren Opferschicht 33 und zwei diametral einander gegenüberliegende Eckfortsätze 320 enthaltende, zweite strukturierbare Aluminium-Schicht ganzflächig aufgebracht und mittels eines zweiten Photolackschritts so strukturiert, daß sie die erste Teilschicht 33' - und somit auch die unter dieser liegende Grundelektrode 32' - vollständig überdeckt, vgl. Fig. 2c. Die zweite Teilschicht 33" hat also rings um die erste Teilschicht 33' und die Grundelektrode 32' herum einen Überdeckungsbereich 332, wo sie auf dem Glassubstrat 32 fest haftet.

An dieser Stelle sei hervorgehoben, daß mit den Begriffen "Überdeckung" bzw. "überdecken" im Rahmen der Erfindung immer ein Sachverhalt gemeint ist, bei dem eine auf eine bereits gebildete Struktur aufgebrachte nächste Schicht über den gesamten Randverlauf dieser Struktur hinausreicht und somit bis auf die diese Struktur tragende Schicht reicht und dort gegebenenfalls fest haftet.

Vorzugsweise ist die zweite Teilschicht 33" dünner als die erste. Die gesamte Opferschicht 33 ist daher in ihrer Höhe abgestuft ausgebildet, wie in Fig. 2c zu sehen ist.

Nun wird eine die Membran 32' enthaltende erste Isolierschicht 32 aus SiO₂ ganzflächig aufgebracht, vgl. die Fig. 1 und 2d, wodurch diese auf den nach dem vorhergehenden Schritt noch freiliegenden Flächen des Glassubstrats 32 fest haftet. In die erste Isolierschicht 32 aus SiO₂ werden über den Eckfortsätzen 320 im Überdeckungsbereich 332 der zweiten Teilschicht 33" Öffnungen 330 für die spätere Zufuhr eines Ätzmittels zu der Opferschicht 33 geätzt, vgl. die Fig. 1 und 2e.

Das Ätzen der Isolierschicht 32 aus SiO₂ wird bevorzugt in einem CF₄-O₂-Plasma durchgeführt. Bei diesem Ätzen verhindert die zweite Teilschicht 33", daß das Glassubstrat 32 angeätzt wird.

Anschließend wird in einer ganzflächig aufgebrachten Photolackschicht eine Photolackmaske erzeugt, deren Öffnung mit einer späteren Deck-Elektrode 32' und damit verbundenen zweiten Leitbahnen 33 kongruent und mit der Grundelektrode 32' ohne die Eckfortsätze 320 zentriert ist. Auf die Photolackmaske wird dann eine die Deck-Elektrode 32' und die zweiten Leitbahnen 33 enthaltende zweite Metallschicht ganzflächig aufgebracht. Die Photolackmaske mit den darauf befindlichen Teilen der zweiten Metallschicht 32 wird anschließend durch einen Lift-Off-Schritt entfernt. Dies ergibt die in Fig. 2f zu sehende Struktur; Deck-Elektrode 32' und die zweiten Leitbahnen 33 sind zurückgeblieben.

Dann wird die Opferschicht 33 durch senkrechtes Ätzen und seitliches Unterätzen durch die Öffnungen 330 hindurch entfernt, so daß sich an der Stelle der Opferschicht 33 ein Hohlraum 34 unter der Membran 32' bildet. Dies geschieht in zwei Stufen, deren erste die zweite Teilschicht 33" zunächst teilweise nur in der Nähe der Öffnung 330 entfernt. Dadurch bildet sich ein Ätzkanal für die anschließende Ätzung der restlichen zweiten Teilschicht 33" und der ersten Teilschicht 33', also der gesamten Opferschicht 33. Das Ergebnis dieses Verfahrensschritts ist in Fig. 2g zu sehen.

Schließlich werden die Öffnungen 330 und damit der Hohlraum 34 durch Aufbringen einer zweiten Isolierschicht 39 in Vakuum hermetisch verschlossen, vgl. Fig. 2h.

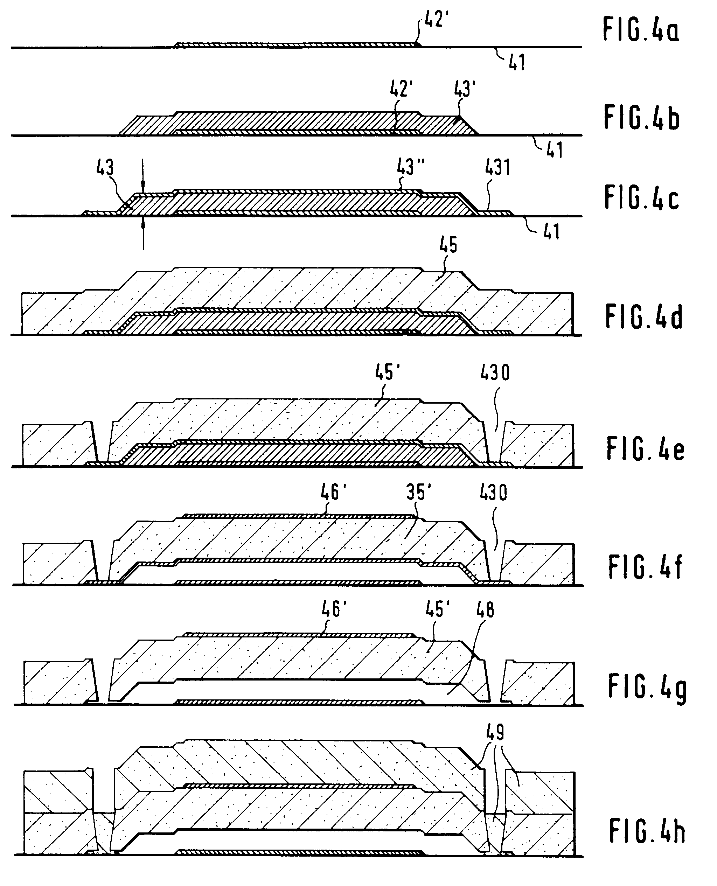

Die Fig. 3 zeigt die Draufsicht auf ein Array von vier neben und übereinander angeordneten, wiederum praktisch quadratischen Absolutdrucksensoren 40 entsprechend der zweiten Variante der Erfindung, die, wie im folgenden erläutert, hergestellt werden. In den Fig. 4a bis 4h sind dazu Schnittansichten entlang der Linie A-A von Fig. 3 gezeigt, die die Ergebnisse von aufeinanderfolgenden Verfahrensschritten darstellen.

Auch bei der zweiten Variante der Erfindung wird anstatt einer in einem einzigen Verfahrensschritt aufgebrachten Opferschicht eine in zwei Teilschritten aufgebrachte und somit aus einer ersten Teilschicht 43' und einer zweiten Teilschicht 43" bestehende Opferschicht 43 verwendet.

Daher wird eine eine spätere Grundelektrode 42' enthaltende erste Metallschicht 42 auf ein als Grundkörper dienendes Glassubstrat 42 aufgebracht und direkt anschließend mittels eines ersten Photolackschritts zur Bildung der Grundelektrode 42' und damit verbundenen ersten Leitbahnen 44 strukturiert, vgl. Fig. 4a. Vom Glassubstrat 42 ist in den Fig. 4a bis 4h lediglich seine eine Oberfläche als Unterkante der jeweiligen Schnittansicht zu sehen.

Nach diesem Verfahrensschritt wird eine einen ersten Teil der Höhe des (späteren) Hohlraums 44 definierende, eine erste Teilschicht 43' einer späteren Opferschicht 43 enthaltende erste strukturierbare Aluminium-Schicht ganzflächig aufgebracht und mittels eines zweiten Photolackschritts so strukturiert, daß sie die Grundelektrode 42' vollständig überdeckt, vgl. die Fig. 3 und 4b.

Anschließend wird eine den restlichen Teil der Höhe des (späteren) Hohlraums 44 definierende, eine zweite Teilschicht 43" der späteren Opferschicht 43 enthaltende, zweite strukturierbare Aluminium-Schicht ganzflächig aufgebracht und mittels eines dritten Photolackschritts so strukturiert, daß sie die erste Teilschicht 43' vollständig überdeckt und zwei diametral einander gegenüberliegende Eckfortsätze 420 aufweist, vgl. die Fig. 3 und 4c. Die zweite Teilschicht 43" hat also rings um die erste Teilschicht 43' einen Überdeckungsbereich 432, wo sie auf dem Glassubstrat 42 fest haftet.

Vorzugsweise ist die zweite Teilschicht 43" dünner als die erste. Die gesamte Opferschicht 43 ist daher in ihrer Höhe abgestuft ausgebildet.

Nun wird eine die Membran 42' enthaltende erste Isolierschicht 42 aus SiO₂ ganzflächig aufgebracht, vgl. die Fig. 3 und 4d, wodurch diese auf den nach dem vorhergehenden Schritt noch freiliegenden Flächen des Glassubstrats 42 fest haftet. In die erste Isolierschicht 42 werden über den Eckfortsätzen 420 im Überdeckungsbereich 432 der zweiten Teilschicht 43" Öffnungen 430 für die spätere Zufuhr eines Ätzmittels zu der Opferschicht 43 geätzt, vgl. die Fig. 3 und 4e.

Das Ätzen der Isolierschicht 42 aus SiO₂ wird bevorzugt in einem CF₄-O₂-Plasma durchgeführt. Bei diesem Ätzen verhindert die zweite Teilschicht 43", daß das Glassubstrat 42 angeätzt wird.

Anschließend wird in einer ganzflächig aufgebrachten Photolackschicht eine Photolackmaske erzeugt, deren Öffnung mit einer späteren Deck-Elektrode 42' und damit verbundenen zweiten Leitbahnen 43 kongruent und mit der Grundelektrode 42' ohne die Eckfortsätze 420 zentriert ist.

Auf die Photolackmaske wird dann eine die Deck-Elektrode 42' und die zweiten Leitbahnen 43 enthaltende zweite Metallschicht ganzflächig aufgebracht. Die Photolackmaske mit den darauf befindlichen Teilen der zweiten Metallschicht wird anschließend wieder durch einen Lift-Off-Schritt entfernt. Dies ergibt die in Fig. 4f zu sehende Struktur; die Deck-Elektrode 42' und die zweiten Leitbahnen 43 sind zurückgeblieben.

Dann wird die Opferschicht 43 durch senkrechtes Ätzen und seitliches Unterätzen durch die Öffnungen 430 hindurch entfernt, so daß sich an der Stelle der Opferschicht 43 der Hohlraum 44 unter der Membran 42' bildet. Dies geschieht in zwei Stufen, deren erste die zweite Teilschicht 43" zunächst teilweise nur in der Nähe der Öffnung 430 entfernt. Dadurch bildet sich ein Ätzkanal für die anschließende Ätzung der restlichen zweiten Teilschicht 43" und der ersten Teilschicht 43', also der gesamten Opferschicht 43. Das Ergebnis dieses Verfahrensschritts ist in Fig. 4g zu sehen.

Schließlich werden die Öffnungen 430 und damit der Hohlraum 44 durch Aufbringen einer zweiten Isolierschicht 49 in Vakuum hermetisch verschlossen, vgl. Fig. 4h.

Die Teil-Maßnahme der Erfindung, die Opferschicht 33 bzw. 43 in die jeweiligen beiden Teilschichten 33', 33" bzw. 43', 43" aufzuteilen, hat den Vorteil, daß die entsprechende Isolierschicht 32 bzw. 42 am Übergang vom Glassubstrat 32 bzw. 42 zur Opferschicht 33 bzw. 43 nicht deren Höhe mit einer einzigen Stufe, wie wenn sie einteilig wäre, zu überdecken hat, sondern daß diese Höhe in zwei kleinere Stufen aufgeteilt ist. Daher ist an diesen Übergangsstellen die Dicke der jeweiligen Isolierschicht 32 bzw. 42 vergleichmäßigt. Außerdem lassen sich die Öffnungen 330 bzw. 430 besser hermetisch verschließen als bei einer einteiligen Opferschicht.

Bei der ersten Variante werden vier Photolackmasken bzw. -schritte und bei der zweiten Verfahrens-Variante fünf Photolackmasken bzw. -schritte benötigt.

Zur Herstellung von resistiven Absolutdrucksensoren können die beiden erläuterten Varianten mit den im folgenden angegebenen Abweichungen benutzt werden: Da keine Grundelektrode erforderlich ist, entfallen die Verfahrensschritte, die sich mit deren Aufbringung und Strukturierung befassen. Anstatt der Schritte zur Aufbringung und Strukturierung der Deck-Elektrode werden Piezo-Widerstände einer Halb- oder einer Vollbrücke und deren Anschlüsse erzeugt.

Bei der gesamten obigen Erläuterung der Erfindung wurde aus Gründen der sprachlichen und definitorischen Handhabbarkeit mit dem Begriff "Membran" lediglich die strukturierte erste Isolierschicht aus SiO₂ bezeichnet, obwohl darauf noch weitere Schichtenteile, wie z.B. die Deck-Elektrode und die zweite Isolierschicht, aufgebracht werden. Für die Kapazitäts- bzw. Widerstands-Druck-Charakteristik des Absolutdrucksensors sind selbstverständlich die Biegeeigenschaften des gesamten Membranaufbaus mit all seinen Schichten maßgeblich.

## Patentansprüche

1. Dünnschichttechnik-Verfahren zum Herstellen eines kapazitiven Absolutdrucksensors (30) mit einem Grundkörper und einer Membran (35'), die einen hermetisch verschlossenen Hohlraum (38) begrenzen, wobei in der angegebenen Reihenfolge nacheinander
a) eine eine spätere Grundelektrode (32') enthaltende erste Metallschicht (32) auf ein als Grundkörper dienendes Glassubstrat (31) ganzflächig aufgebracht wird,
b) eine einen ersten Teil der Höhe des Hohlraums (38) definierende, eine erste Teilschicht (33') einer späteren Opferschicht (33) enthaltende erste strukturierbare Aluminiumschicht ganzflächig aufgebracht wird,
c) die erste strukturierbare Aluminiumschicht und die erste Metallschicht (32) in einem einzigen, ersten Photolackschritt zur gemeinsamen Bildung von Grundelektrode (32') und damit verbundenen ersten Leitbahnen (34) sowie der mit Grundelektrode und ersten Leitbahnen praktisch deckungsgleichen ersten Teilschicht (33') durch Ätzen strukturiert werden,
d) eine den restlichen Teil der Höhe des Hohlraums (38) definierende, eine zweite Teilschicht (33") der späteren Aluminium-Opferschicht (33) und zwei diametral gegenüberliegende Eckfortsätze (310) enthaltende, zweite strukturierbare Aluminiumschicht ganzflächig aufgebracht und mittels eines zweiten Photolackschritts so strukturiert wird, daß sie die erste Teilschicht (33') vollständig überdeckt,
e) eine die Membran (35') enthaltende erste Isolierschicht (35) aus SiO₂ ganzflächig aufgebracht wird, wodurch diese auf den nach Schritt d) noch freiliegenden Flächen des Glassubstrats (31) fest haftet, und über den Eckfortsätzen (310) Öffnungen (330) in die erste Isolierschicht (35) aus SiO₂ für die spätere Zufuhr eines Ätzmittels zu der Aluminium-Opferschicht (33) geätzt werden,
f) in einer ganzflächig aufgebrachten Photolackschicht eine Photolackmaske erzeugt wird, deren Öffnung mit einer späteren Deck-Elektrode (36') und mit dieser verbundenen zweiten Leitbahnen (37) kongruent und mit der Grundelektrode (32') ohne die Eckfortsätze (310) zentriert ist,
g) auf die Photolackmaske eine die Deck-Elektrode (36') enthaltende zweite Metallschicht ganzflächig aufgebracht wird,
h) die Photolackmaske mit den darauf befindlichen Teilen der zweiten Metallschicht (36) durch einen Lift-Off-Schritt entfernt wird,
i) die Aluminium-Opferschicht (33) durch senkrechtes Ätzen und seitliches Unterätzen durch die Öffnungen (330) hindurch entfernt wird und
k) die Öffnungen (330) und damit der Hohlraum (38) durch Aufbringen einer zweiten Isolierschicht (39) in Vakuum hermetisch verschlossen werden.

2. Dünnschichttechnik-Verfahren zum Herstellen eines kapazitiven Absolutdrucksensors (40) mit einem Grundkörper und einer Membran (45'), die einen hermetisch verschlossenen Hohlraum (48) begrenzen, wobei in der angegebenen Reihenfolge nacheinander
a') eine eine spätere Grundelektrode (42') enthaltende erste Metallschicht (42) auf ein als Grundkörper dienendes Glassubstrat (41) ganzflächig aufgebracht und mittels eines ersten Photolackschritts zur Bildung der Grundelektrode (42') und damit verbundenen ersten Leitbahnen (44) strukturiert wird,
b') eine einen ersten Teil der Höhe des Hohlraums (48) definierende, eine erste Teilschicht (43') einer späteren Opferschicht (43) enthaltende erste strukturierbare Aluminiumschicht ganzflächig aufgebracht und mittels eines zweiten Photolackschritts so strukturiert wird, daß sie die Grundelektrode (42') vollständig überdeckt,
d') eine den restlichen Teil der Höhe des Hohlraums (48) definierende, eine zweite Teilschicht (43") der späteren Aluminium-Opferschicht (43) und zwei diametral gegenüberliegende Eckfortsätze (410) enthaltende, zweite strukturierbare Aluminiumschicht ganzflächig aufgebracht und mittels eines dritten Photolackschritts so strukturiert wird, daß sie die erste Teilschicht (43') vollständig überdeckt,
e) eine die Membran (45') enthaltende erste Isolierschicht (45) aus SiO₂ ganzflächig aufgebracht wird, wodurch diese auf den nach Schritt d') noch freiliegenden Flächen des Glassubstrats (41) fest haftet, und über den Eckfortsätzen (410) Öffnungen (430) in die erste Isolierschicht (45) aus SiO₂ für die spätere Zufuhr eines Ätzmittels zu der Aluminium-Opferschicht (43) geätzt werden,
f) in einer ganzflächig aufgebrachten Photolackschicht eine Photolackmaske erzeugt wird, deren Öffnung mit einer späteren Deck-Elektrode (46') und mit dieser verbundenen zweiten Leitbahnen (47) kongruent und mit der Grundelektrode (42') ohne die Eckfortsätze (410) zentriert ist,
g) auf die Photolackmaske eine die Deck-Elektrode (46') enthaltende zweite Metallschicht ganzflächig aufgebracht wird,
h) die Photolackmaske mit den darauf befindlichen Teilen der zweiten Metallschicht (46) durch einen Lift-Off-Schritt entfernt wird,
i) die Aluminium-Opferschicht (43) durch senkrechtes Ätzen und seitliches Unterätzen durch die Öffnungen (430) hindurch entfernt wird und
k) die Öffnungen (430) und damit der Hohlraum (48) durch Aufbringen einer zweiten Isolierschicht (49) in Vakuum hermetisch verschlossen werden.

3. Dünnschichttechnik-Verfahren nach Anspruch 1 oder 2, bei dem als Material für die erste Metallschicht (32, 42) und damit für die Grundelektrode (32', 42') und/oder die zweite Metallschicht (36, 46) und damit für die Deck-Elektrode (36', 46') Chrom verwendet wird.

4. Dünnschichttechnik-Verfahren nach Anspruch 1 oder 2, bei dem auch die zweite Isolierschicht (39, 49) aus SiO₂ besteht, das durch chemisches Abscheiden in einem Plasma aufgebracht wird.

5. Dünnschichttechnik-Verfahren nach Anspruch 1 oder 2, bei dem die zweite Teilschicht (33", 43") der Aluminium-Opferschicht (33, 43) dünner als deren erste Teilschicht (33', 43') ist.

## Claims

1. A thin-film process for manufacturing a capacitive absolute pressure sensor (30) with a base element and a diaphragm (35') which bound a hermetically sealed cavity (38), comprising the following steps in the order given:
a) depositing a first metal layer (32) over the entire surface of a glass substrate (31) serving as the base element, said first metal layer containing a substrate electrode (32') to be formed;
b) depositing over the entire surface a first patternable aluminum layer containing a first partial layer (33') of a sacrificial layer (33) to be formed, said first partial layer (33') defining a first part of the height of the cavity (38);
c) patterning the first patternable aluminum layer and the first metal layer (32) in a single, first photoresist step by etching, for simultaneously forming the substrate electrode (32'), first interconnection tracks (34) connected therewith, and the first partial layer (33'), which is virtually congruent with the substrate electrode and the first interconnection tracks;
d) depositing over the entire surface a second patternable aluminum layer which defines the remainder of the height of the cavity (38) and contains a second partial layer (33") of the sacrificial aluminum layer (33) to be formed and two diametrically opposed corner extensions (310), and patterning said second patternable aluminum layer in a second photoresist step such that it completely covers the first partial layer (33');
e) depositing a first insulating layer (35) of SiO₂ containing the diaphragm (35') over the entire surface, whereby it firmly adheres to the areas of the glass substrate (31) still exposed after step d), and etching openings (330) into the first insulating layer (35) of SiO₂ above the corner extensions (310) for the subsequent supply of an etchant to the sacrificial aluminum layer (33);
f) forming, in a photoresist layer deposited over the entire surface, a photoresist mask whose opening is congruent with a top electrode (36') to be formed and with second interconnection tracks (37) connected therewith and is centered with the substrate electrode (32') without the corner extensions (310);
g) depositing a second metal layer containing the top electrode (36') over the entire surface of the photoresist mask;
h) removing the photoresist mask with the overlying portions of the second metal layer (36) by a lift-off step;
i) removing the sacrificial aluminum layer (33) by vertical etching and lateral etching through the openings (330); and
k) hermetically sealing the openings (330), and thus the cavity (38), by depositing a second insulating layer (39) in a vacuum.

2. A thin-film process for manufacturing a capacitive absolute pressure sensor (40) with a base element and a diaphragm (45') which bound a hermetically sealed cavity (48), comprising the following steps in the order given:
a') depositing a first metal layer (42) over the entire surface of a glass substrate (41) serving as the base element, said first metal layer (42) containing a substrate electrode (42') to be formed, and patterning said first metal layer (42) in a first photoresist step for forming the substrate electrode (42') and first interconnection tracks (44) connected therewith;
b') depositing over the entire surface a first patternable aluminum layer which defines a first part of the height of the cavity (48) and contains a first partial layer (43') of a sacrificial layer (43) to be formed, and patterning said first patternable aluminum layer in a second photoresist step such that it completely covers the substrate electrode (42');
d') depositing over the entire surface a second patternable aluminum layer which defines the remainder of the height of the cavity (48) and contains a second partial layer (43") of the sacrificial aluminum layer (43) to be formed and two diametrically opposed corner extensions (410), and patterning said second patternable aluminum layer in a third photoresist step such that it completely covers the first partial layer (43');
e) depositing a first insulating layer (45) of SiO₂ containing the diaphragm (45') over the entire surface, whereby it firmly adheres to the areas of the glass substrate (41) still exposed after step (d'), and etching openings (430) into the first insulating layer (45) above the corner extensions (410) for the subsequent supply of an etchant to the sacrificial aluminum layer (43);
f) forming, in a photoresist layer deposited over the entire surface, a photoresist mask whose opening is congruent with a top electrode (46') to be formed and with second interconnection tracks (47) connected therewith and is centered with the substrate electrode (42') without the corner extensions (410);
g) depositing a second metal layer (46) containing the top electrode (46') over the entire surface of the photoresist mask;
h) removing the photoresist mask with the overlying portions of the second metal layer (46) by a lift-off step;
i) removing the sacrificial aluminum layer by vertical etching and lateral etching through the openings (430); and
k) hermetically sealing the openings (430), and thus the cavity (48), by depositing a second insulating layer (49) in a vacuum.

3. A thin-film process as claimed in claim 1 or 2 wherein the material used for the first metal layer (32, 42), and thus for the substrate electrode (32', 42'), and/or the material used for the second metal layer (36, 46), and thus for the top electrode (36', 46'), is chromium.

4. A thin-film process as claimed of claim 1 or 2 wherein the second insulating layer (39, 49) is also of SiO_{2,} which is applied by plasma chemical vapor deposition.

5. A thin-film process as claimed in claim 1 or 2 wherein the second partial layer (33", 43") of the sacrificial aluminum layer (33, 43) is thinner than the first partial layer (33', 43') of the latter.

## Revendications

1. Procédé de fabrication, par la technique des couches minces, d'un capteur capacitif (30) de pression absolue comprenant un ccrps principal et une membrane (35') qui délimitent un espace creux (38) fermé hermétiquement où, successivement, et dans l'ordre indiqué :
a) on applique, sur toute la surface d'un substrat en verre (31) servant de corps principal, une première couche métallique (32) contenant ultérieurement une électrode principale (32'),
b) on applique, sur toute la surface, une première couche d'aluminium structurable définissant une première partie de la hauteur de l'espace creux (38) et contenant une première couche partielle (33') d'une couche sacrificielle ultérieure (33),
c) la première couche d'aluminium structurable et la première couche métallique (32) étant structurées par attaque chimique dans une première phase unique de vernis photosensible pour la formation commune de l'électrode principale (32') et de premiers circuits conducteurs (34) connectés à ladite électrode, ainsi que pour la formation de la première couche partielle (33') qui coïncide pratiquement avec l'électrode principale et les premiers circuits conducteurs,
d) on applique, sur toute la surface, une seconde couche d'aluminium structurable définissant la partie résiduelle de la hauteur de l'espace creux (38) et contenant une seconde couche partielle (33") de la couche sacrificielle ultérieure (33) d'aluminium et contenant deux prolongements angulaires (310) diamétralement opposés, ladite couche d'aluminium étant structurée au moyen d'une deuxième phase de vernis photosensible, de façon telle que ladite couche d'aluminium recouvre complètement la première couche partielle (33'),
e) on applique, sur toute la surface, une première couche isolante (35) d'oxyde de silicium (SiO₂) contenant la membrane (35'), grâce à quoi ladite couche isolante adhère fixement sur les surfaces encore libres du substrat en verre (31) après la phase *d*), des ouvertures (330) étant attaquées chimiquement sur les prolongements angulaires (310) de la première couche isolante (35) d'oxyde de silicium (SiO₂) pour l'apport ultérieur d'un réactif d'attaque ajouté à la couche sacrificielle (33) d'aluminium,
f) on produit un masque de vernis photosensible dans une couche de vernis photosensible appliquée sur toute la surface, masque dont l'ouverture coïncide avec une contre-électrode (36') ultérieure et avec de seconds circuits conducteurs (37) connectés à ladite contre-électrode, ladite ouverture étant centrée avec l'électrode principale (32') sans les prolongements angulaires (310),
g) on applique, sur toute la surface du masque de vernis photosensible, une seconde couche métallique contenant la contre-électrode (36'),
h) on enlève, par décollement, le masque de vernis photosensible ainsi que les parties de la seconde couche métallique (36) se trouvant sur le masque,
i) on enlève la couche sacrificielle (33) d'aluminium par attaque chimique effectuée perpendiculairement et latéralement par les ouvertures (330), et
k) les ouvertures (330) ainsi que l'espace creux (38) sont obturés hermétiquement sous vide en appliquant une seconde couche isolante (39).

2. Procédé de fabrication, par la technique des couches minces, d'un capteur capacitif (40) de pression absolue comprenant un corps principal et une membrane (45') qui délimitent un espace creux (48) fermé hermétiquement où, successivement, et dans l'ordre indiqué :
a') on applique, sur toute la surface d'un substrat en verre (41) servant de corps principal, une première couche métallique (42) contenant ultérieurement une électrode principale (42'), ladite couche métallique étant structurée au moyen d'une première phase de vernis photosensible pour la formation de l'électrode principale (42') et de premiers circuits conducteurs (44) connectés à ladite électrode principale,
b') on applique, sur toute la surface, une première couche d'aluminium structurable définissant une première partie de la hauteur de l'espace creux (48) et contenant une première couche partielle (43') d'une couche sacrificielle ultérieure (43), laquelle couche d'aluminium est structurée au moyen d'une deuxième phase de vernis photosensible, de façon telle que ladite couche d'aluminium recouvre complètement la contre-électrode (42'),
d') on applique, sur toute la surface, une seconde couche d'aluminium structurable définissant la partie résiduelle de la hauteur de l'espace creux (48) et contenant une seconde couche partielle (43") de la couche sacrificielle ultérieure (43) d'aluminium et contenant deux prolongements angulaires (410) diamétralement opposés, ladite couche d'aluminium étant structurée au moyen d'une troisième phase de vernis photosensible, de façon telle que ladite couche d'aluminium recouvre complètement la première couche partielle (43'),
e) on applique, sur toute la surface, une première couche isolante (45) d'oxyde de silicium (SiO₂) contenant la membrane (45'), grâce à quoi ladite couche isolante adhère fixement sur les surfaces encore libres du substrat en verre (41) après la phase *d'*), des ouvertures (430) étant attaquées chimiquement sur les prolongements angulaires (410) de la première couche isolante (45) d'oxyde de silicium (SiO₂) pour l'apport ultérieur d'un réactif d'attaque ajouté à la couche sacrificielle (43) d'aluminium,
f) on produit un masque de vernis photosensible dans une couche de vernis photosensible appliquée sur toute la surface, masque dont l'ouverture coïncide avec une contre-électrode (46') ultérieure et avec de seconds circuits conducteurs (47) connectés à ladite contre-électrode, ladite ouverture étant centrée avec l'électrode principale (42') sans les prolongements angulaires (410),
g) on applique, sur toute la surface du masque de vernis photosensible, une seconde couche métallique contenant la contre-électrode (46'),
h) on enlève, par décollement, le masque de vernis photosensible ainsi que les parties de la seconde couche métallique (46) se trouvant sur le masque,
i) on enlève la couche sacrificielle (43) d'aluminium par attaque chimique effectuée perpendiculairement et latéralement par les ouvertures (430), et
k) les ouvertures (430) ainsi que l'espace creux (48) sont obturés hermétiquement sous vide en appliquant une seconde couche isolante (49).

3. Procédé par la technique des couches minces selon la revendication 1 ou 2, dans lequel on utilise du chrome servant de matériau pour la première couche métallique (32, 42) et donc pour l'électrode principale (32', 42') et/ou pour la seconde couche métallique (36, 46) et donc pour la contre-électrode (36', 46').

4. Procédé par la technique des couches minces selon la revendication 1 ou 2, dans lequel la seconde couche isolante (39, 49) est également en oxyde de silicium (SiO₂) qui est appliqué dans un plasma par dépôt chimique.

5. Procédé par la technique des couches minces selon la revendication 1 ou 2, dans lequel la seconde couche partielle (33", 43") de la couche sacrificielle (33, 43) d'aluminium est plus mince que sa première couche partielle (33', 43').
